(19) Europäisches Patentamt
European Patent Office
Office européen des brevets

(11) Publication number: **0 219 131**
**A2**

(12) **EUROPEAN PATENT APPLICATION**

(21) Application number: 86114360.0

(22) Date of filing: 16.10.86

(51) Int.Cl.⁴: C 08 G 18/10
C 08 G 18/62, C 08 G 18/79
C 09 D 3/72

(30) Priority: 18.10.85 JP 231054/85

(43) Date of publication of application: 22.04.87 Bulletin 87/17

(84) Designated Contracting States: DE FR GB NL

(71) Applicant: DAINIPPON INK AND CHEMICALS, INC.
35-58, Sakashita 3-chome
Itabashi-ku, Tokyo 174(JP)

(72) Inventor: Kase, Mitsuo
1-5-2-706, Saiwai-cho
Chiba-shi Chiba-ken(JP)

(72) Inventor: Takahashi, Yosuke
Kishin-ryo, 4-4 Tatsumidai Higashi
Ichihara-shi Chiba-ken(JP)

(72) Inventor: Okoshi, Noboru
16-15, Nagauraekimae 4-ch. Sodegaura-machi
Kimitsu-gun Chiba-ken(JP)

(74) Representative: Kraus, Walter, Dr. et al,
Patentanwälte Kraus, Weisert & Partner
Thomas-Wimmer-Ring 15
D-8000 München 22(DE)

(54) **Surface-finish coating method.**

(57) A surface-finish coating method, which comprises coating a surface with a two-package urethane paint comprising

(A) an isocyanurate ring-containing polyisocyanate derived from a diisocyanate compound selected from the group consisting of alkylene diisocyanates, cycloalkylene diisocyanates and aralkylene diisocyanates, and

(B) an acrylic polyol having a number average molecular weight of 4,000 to 25,000, a hydroxyl value of 20 to 160 and a glass transition temperature of 35 to 75°C, as essential binder components.

EP 0 219 131 A2

Croydon Printing Company Ltd

0219131

This invention relates to a novel and useful surface-finish coating method. More specifically, this invention relates to an improved surface-finish coating method in the top coating of articles having a relatively heavy weight such as vehicles, industrial machinery, and building and construction machinery using a paint comprising a specific polyisocyanate and a specific acrylic polyol as binder components. Above all, it relates to a method of repair top coating of various articles including, for example, vehicles such as automobiles, trucks, railroad vehicles or tractors, various types of industrial machinery such as chemical apparatuses, boilers, prime movers, compressors and air blowers, and building and construction machinery.

Fast-drying paints such as nitrocellulose lacquers or acrylic lacquers have previously been used extensively as top coating paints for repair of vehicles such as automobiles. Because of their inferior durability, these paints have recently been superseded by non-yellowing two-package urethane paints having superior weatherability.

These two-package urethane paints, however, have the serious practical defect that when they are used as repair top coating paints for automobile, for example, long periods of time are required for finishing and the job efficiency is low. Conventional non-yellowing two-package urethane paints generally comprise biuret-type polyisocyanates obtained by reaction of hexamethylene diisocyanate with water as curing agents and acrylic polyols as a main agent. These conventional paints generally dry slowly, and dusts are liable to adhere to top coats. Furthermore, when the coated film is splashed with water, water spots remain for a long time. If the coated article is transferred to an outdoor site during this time and rain drops on it, water spots

remain there and cannot be erased. These troubles greatly reduce the commercial value of the coated article.

If, therefore, an article can be transferred outdoors immediately after it is coated and dried at room temperature indoors, the job efficiency will no doubt be increased strikingly. It has been desired therefore to provide a surface finish coating method having a good job efficiency.

It is an object of this invention to overcome the aforesaid prior problems of a non-yellowing two-package urethane paint used in repair top coating of vehicles.

The present inventors have found that the aforesaid problems of a conventional two-package urethane paint do not arise when a two-package urethane paint comprising a specific polyisocyanate and a specific acrylic polyol as essential binder components is used to perform surface-finish coating on articles having a relatively heavy weight, such as vehicles, industrial machinery, and building and construction machinery, which cannot be conveyed on a belt conveyor line and therefore cannot be forcibly dried.

According to this invention, there is provided a novel and useful surface-finish coating method, which comprises coating a surface with a two package urethane paint comprising

(A) an isocyanurate ring-containing polyisocyanate derived from a diisocyanate compound selected from the group consisting of alkylene diisocyanates, cycloalkylene diisocyanates and aralkylene diisocyanates, and

(B) an acrylic polyol having a number average molecular weight of 4,000 to 25,000, a hydroxyl value of 20 to 160 and a glass transition temperature of 35 to 75$^{o}$C,

as essential binder components.

The isocyanurate ring-containing polyisocyanate (A) generally has poor compatibility with the acrylic polyol (B), and therefore, the kind of the acrylic polyol (B) to be combined with the polyisocyanate (A) is sometimes restricted. Such a restriction, however, can be removed if a diol-modified isocyanurate ring-containing polyisocyanate is used as the polyisocyanate (A). It is especially preferred to use isocyanurate ring-containing polyisocyanates modified with alkylene diols containing at least 3 hydrocarbon substituents per molecule and having a molecular weight of 100 to 1,000 and/or cycloalkylene diols.

It is especially noteworthy and valuable that such isocyanurate ring-containing polyisocyanates modified with diols, above all with alkylene diols containing at least 3 hydrocarbon substituent per molecule and having a molecular weight of 100 to 1,000, and/or cycloalkylene diols have a shorter water spot disappearance time (hereinafter defined) than unmodified isocyanurate ring-containing polyisocyanates.

Alkylene diisocyanates, cycloalkylene diisocyanates and aralkylene diisocyanates are used as starting diisocyanate compounds for preparing the isocyanurate ring-containing polyisocyanates (A). Specific examples of the alkylene diisocyanates include 1,4-tetramethylene diisocyanate, 1,6-hexamethylene diisocyanate, 2,2,4- or 2,4,4-trimethylhexamethylene diisocyanate, 2,6-diisocyanatomethyl caproate (lysine diisocyanate), and mixtures of these. Specific examples of the cycloalkylene diisocyanates include 1,3- or 1,4-diisocyanatocyclohexane, 1,3- or 1,4-bis(isocyanatomethyl) cyclohexane, dicyclohexylmethane-4,4'-diisocyanate, isopropylidene-bis(4-cyclohexyl isocyanate), 3-isocyanatomethyl-3,5,5-trimethylcyclohexyl isocyanate (isophorone diisocyanate) and mixtures of these. The aralkylene diisocyanates typically include, for example, xylylene

diisocyanate, tetramethylxylylene diisocyanate, 4,4'-bis(isocyanatomethyl)diphenylmethane, and mixtures of these.

Isocyanurating catalysts are used for preparing the isocyanurate ring-containing polyisocyanates (A) from these diisocyanate compounds with or without diols. Suitable isocyanurating catalysts are compounds containing atoms or atomic groupings having a low electron density and strong cationic property. Typical examples of these compounds are N,N,N-trimethyl-N-2-hydroxypropyl ammonium p-tert-butylbenzoate of the following formula

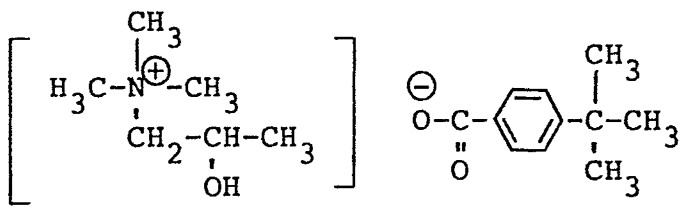

[I]

sodium ethylate, and sodium propionate. The compound of formula [I] is especially preferred because it is easy to purify. The isocyanurating catalysts are not limited to the above examples, and any catalyst effective for isocyanuration may be used.

Advantageously, the isocyanurating catalyst is used in an amount of 10 to 1,000 ppm, preferably 20 to 500 ppm, as a solution in an organic solvent.

The isocyanuration reaction for preparation of the isocyanurate ring-containing polyisocyanate (A) is conveniently carried out at a temperature of usually 30 to 120°C, preferably 40 to 100°C. Desirably, the reaction is carried out at a conversion of 20 to 70% by weight, preferably 25 to 65% by weight, based on the amount of the starting material. If the conversion exceeds 70% by weight, the resulting polyisocyanate has too high a molecular weight and its solubility is undesirably reduced.

After the reaction, such a compound as phosphoric acid, monochloroacetic acid or dodecylbenzenesulfonic acid is added to the reaction mixture to deactivate the catalyst, and the unreacted diisocyanate compound is removed by molecular distillation, etc. to give the desired isocyanurate ring-containing polyisocyanate (A).

Preferably, the polyisocyanate (A) so obtained usually has a number average molecular weight of 550 to 1,200 and an isocyanate group content of 10 to 17% by weight as a solution in an organic solvent in a concentration of 75% by weight.

Conventional organic solvents inert to the isocyanate groups, such as ethyl acetate, n-butyl acetate, toluene, xylene and Cellosolve acetate, are used as diluting solvents for the polyisocyanate (A).

As stated above, the diol-modified polyisocyanates (A) can be easily prepared by isocyanurating the various diisocyanate compounds described above in the presence of diols by the method described above. If particularly desired, they can also be prepared easily by first preparing isocyanurate ring-containing polyisocyanates from various diisocyanate compounds, and then reacting the unmodified polyisocynates with diols.

The diols used for modification may be ordinary diols such as 1,3-butanediol, 1,6-hexanediol and neopentyl glycol. If these diols are used in large amounts, the drying property of the resulting paint may be deteriorated to impair the inherent drying property of the isocyanurate ring-containing polyisocyanate (A). Diol modifiers free from such a defect are, for example, alkylene diols containing at least 3 hydrocarbon substituents per molecule and having a molecular weight of 100 to 1,000 and/or cycloalkylene diols. Typical examples of the alkylene diols are 1,2,2-trimethyl-1,3-propanediol (2,2-dimethyl-1,3-butanediol), 2,2-dimethyl-3-isopropyl-1,3-propanediol (2,2,4-trimethyl-1,3-pentanediol), 2,2-dimethyl-3-benzyl-1,3-propanediol (2,2-dimethyl-4-phenyl-1,3-butanediol), 2,2-dimethyl-3-isobutyl-1,3-propanediol (2,2,4-trimethyl-1,3-hexanediol), 2,2,3,3-tetramethyl-1,4-butanediol, 2,2,4-trimethyl-1,5-pentanediol, 2,2,4-trimethyl-1,6-hexanediol, and mixtures thereof.

Suitable cycloalkylene diols have 5 to 30 carbon atoms, preferably 6 to 20 carbon atoms, and typical examples include bis(4-hydroxycyclohexyl)methane, 2,2-bis(4-hydroxycyclohexyl)propane, 2,2-bis(4-hydroxycyclohexyl)butane, 1,4-hydroxymethylcyclohexane and mixtures of these.

Cycloalkylene diols having less than 5 carbon atoms are undesirable because they impair the compatibility of the isocyanurate ring-containing polyisocyanate (A) with the acrylic polyol (B). Cycloalkylene diols having more than 30 carbon atoms are also undesirable because they reduce the isocyanate group content of the polyisocyanate (A).

For the polyisocyanate (A) to have good curability (drying property), the cycloalkylene diols desirably have a rigid 5- to 7-membered ring and good chemical stability.

In the present invention, the diisocyanate compounds described above may be used singly or in combination to give polyisocyanates (A) as a curing agent for a non-yellowing urethane paint having excellent drying property.

When, however, a balance of properties such as mechanical properties and weatherability is particularly considered while retaining the best drying property of the curing agent, the use of a mixture of the alkylene diisocyanate and the cycloalkylene diisocyanate at a weight ratio of from 85:15 to 55:45 is very effective. Likewise, the use of a mixture of the alkylene diisocyanate and the aralkylene diisocyanate in a weight ratio of from 95:5 to 70:30 is effective for obtaining optimum curability and other properties.

The cycloalkylene diisocyanates, above all isophorone diisocyanate, have poor reactivity with the isocyanate groups, and therefore are desirably used in combination with other diisocyanate compounds in the proportions described above.

The suitable amount of the modifying diol is generally in the range of 0.3 to 30 mole%, preferably 0.5 to 20 mole%, especially preferably 0.5 to 15 mole%, based on the total amount of the diisocyanate compound. Within this quantitative range, the diols may be used singly or in combination. If, however, ordinary diols such as 1,3-butanediol, 1,6-hexanediol or neopentyl glycol is used as the modifier, its amount should be minimized for the reason stated hereinabove.

The acrylic polyol (B) used in this invention has a number average molecular weight of 4,000 to 25,000, a hydroxyl value of 20 to 160 and a glass transition temperature of 35 to 75°C. Preferred examples include compounds obtained by radical polymerization of ethylenic hydrocarbon derivatives of general formulae [II] to [V] optionally together with other monomers.

(1) Compounds of the general formula

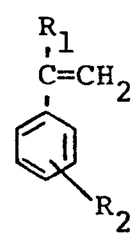

[II]

wherein each of $R_1$ and $R_2$ represents a hydrogen atom, or a $C_1$-$C_{12}$ hydrocarbon group which may contain an oxygen atom. Examples are styrene, alpha-methylstyrene, p-methylstyrene, p-methoxystyrene and p-tert-butylstyrene.

(2) Compounds of the general formula

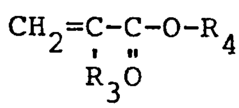

[III]

wherein $R_3$ represents a hydrogen atom or a $C_1$-$C_{12}$ hydrocarbon residue, and $R_4$ represents a $C_1$-$C_{12}$

hydrocarbon residue which may contain an oxygen atom. Examples are methyl methacrylate, n-butyl methacrylate, isobutyl methacrylate, tert-butyl methacrylate, 2-ethylhexyl methacrylate, ethyl acrylate, n-butyl acrylate, 2-ethylhexyl acrylate and 2-ethoxyethyl acrylate.

(3) Compounds of the general formula

$$CH_2=\underset{R_3}{C}-\underset{O}{\overset{}{C}}-O-CH_2-\underset{OH}{CH}-R_3 \qquad [IV]$$

wherein $R_3$ is as defined above. Examples are beta-hydroxyethyl methacrylate, beta-hydroxypropyl methacrylate and beta-hydroxyethyl acrylate.

(4) Compounds of the general formula

$$\begin{array}{l} \qquad\quad C-\underset{O}{C}-O-R_5 \\ R_5-O-\underset{O}{C}-C \end{array} \qquad [V]$$

wherein $R_5$ represents a $C_1$-$C_{12}$ hydrocarbon residue. Examples include diethyl fumarate, di-n-butyl fumarate, diisobutyl fumarate and di-2-ethylhexyl fumarate.

Carboxyl group-containing ethylenic hydrocarbons such as acrylic acid, methacrylic acid and itaconic acid, and ethylenic hydrocarbon derivatives containing an oxirane ring such as glycidyl methacrylate can also be used as monomers for preparing the acrylic polyols (B) although they are not encompassed within the general formulae [II] to [V].

The acrylic polyol (B) may be easily produced from the various ethylenic hydrocarbon derivatives described above by radical polymerization in a customary manner using a conventional radical polymerization initiator such as benzoyl peroxide, azobisisobutyronitrile, tert-butyl peroctoate, di-tert-butyl peroxide or tert-butyl perbenzoate.

Such radical polymerization is usually carried out in an organic solvent such as toluene, xylene or n-butyl acetate at a temperature in the range of 60 to 150°C.

Suitable acrylic polyols (B) have a number average molecular weight of 4,000 to 25,000, preferably 4,500 to 20,000. If the acrylic polyol (B) has too low a molecular weight, it is difficult to obtain a fast drying paint. On the other hand, if its molecular weight is too high, the operability of the resulting paint during coating is undesirably reduced.

The suitable hydroxyl value of the acrylic polyol (B) is 20 to 160, preferably 30 to 120, calculated as solids. If the hydroxyl value of the acrylic polyol is too low, it is difficult to obtain a paint which can give a coated film having good properties. If it is too high, the expensive polyisocyanates are used in large quantities to cause an economic loss.

The glass transition temperature (Tg) of the acrylic polyol (B) is not particularly restricted although it should desirably be not too low in order to obtain favorable drying property. Usually, the suitable glass transition temperature is at least 35°C, particularly at least 40°C. If the Tg of the acrylic polyol (B) is too high, a coated film from the resulting paint tends to lose flexibility. Hence, the Tg of the acrylic polyol (B) is desirably not more than 75°C, preferably not more than 70°C.

If desired in particular, the acrylic polyol (B) may be one graft-modified with a polyester including an alkyd resin or a cellulose such as cellulose acetate butyrate. The amount of such a modifying compound, however, should desirably be limited to not more than 50% by weight, preferably not more than 30% by weight, in order not to impair the excellent weatherability of the acrylic polyol itself.

The non-yellowing two-package urethane paint comprising the isocyanurate ring-containing polyisocyanate (A) and the acrylic polyol (B) as essential binder components is obtained by blending the two

components so that the proportion of the isocyanate groups of component (A) are equivalent to that of the hydroxyl groups of component (B), namely, the equivalent ratio of NCO/OH, is 1.0. If particularly desired, it is recommended to use the polyisocyanate (A) and the acrylic polyol (B) in such blending ratios that the NCO/OH equivalent ratio is from 0.3 to 2.0, preferably from 0.8 to 1.2.

The resulting two-package urethane paint can be used as a clear varnish, or as an enamel or a metallic base coat paint in a form containing conventional pigments or body extender pigments such as titanium white, carbon black or cyanine blue. The various pigments, etc. in the enamel or metallic base coat paint are usually mixed and kneaded with the main agent [i.e., the acrylic polyol (B)]. In paint preparation, ordinary thinners such as those used in urethane paints may of course be used as the diluting solvents.

It is also possible to incorporate various conventional additives, for example celluloses such as cellulose acetate butyrate or nitrocellulose, plasticizers, levelling agents or surface-active agents. If particularly desired, a curing catalyst may also be incorporated.

An ordinary coating method such as air spraying or electrostatic coating may be employed to practice the method of this invention using the non-yellowing two-package urethane paint.

The above two-package paint is used as an ordinary temperature-curable paint. If desired in particular, the applied paint may be forcibly dried at a temperature of 40 to 100°C.

The surface-finish coating method of this invention is applied particularly to the top coating of articles having a relatively heavy weight, for example various vehicles such as automobiles, trucks, railroad

vehicles or tractors, industrial machinery, or building and construction machinery. It is especially useful for repair coating of such articles, particularly vehicles.

The following Referential Examples, Examples and Comparative Examples specifically illustrate the present invention. All percentages in the following examples are by weight unless otherwise specified.

REFERENTIAL EXAMPLE 1

Preparation of an isocyanurate ring-containing polyisocyanate (A):-

A 2-liter four-necked glass flask equipped with a stirrer, a nitrogen gas inlet tube, an air cooling tube and a thermometer was charged in an atmosphere of nitrogen gas with 1,400g (8.32 moles) of hexamethylene diisocyanate (HMDI; molecular weight=168.2) and 50g (0.34 mole) of 2,2,4-trimethyl-1,3-pentanediol (TMPD; molecular weight=146.2). An oil bath was attached to the flask, and the reactant mixture was heated to 55°C with stirring and maintained at this temperature for about 1 hour. A 20% butyl Cellosolve solution of N,N,N-trimethyl-N-2-hydroxypropyl ammonium p-tert-butylbenzoate of formula [I] given hereinabove (CPG; molecular weight=295.4) was added portionwise. When 1.3g (0.88 millimole) in total of the catalyst solution was added, the reaction began and exotherm was observed. The temperature inside the reactor rose to 62°C. After the heat generation ceased, the temperature inside the reactor was maintained at 60°C, and the reaction was continued for a total period of 4.5 hours. As a catalyst deactivating agent, 1.3g (0.94 millimole) of a 6.8% xylene solution of monochloroacetic acid (molecular weight 94.5) was added to the reactor to terminate the reaction.

The reaction mixture was then cooled to room temperature, and 1,000g of it was subjected to molecular distillation to obtain 331.3g (conversion=33.2%) of the desired polyisocyanate (A) and 668.7g (recovery

ratio=66.8%) of a distillate.

The resulting polyisocyanate (A) was a liquid substance having flowability at room temperature. It was then diluted with ethyl acetate to a concentration of 75% to form a solution of the polyisocyanate (A). This will be abbreviated hereinbelow as polyisocyanate (A-1).

The resulting polyisocyanate (A-1) had a involatile content (NV) of 75.3%, a Gardner color number of less than 1, a Gardner viscosity at 25°C (the same hereinafter) of $A_1$ - A, and an isocyanate group content of 15.0%. Analysis showed that it contained an isocyanuate ring. Its molecular weight was found to be 643.

The distillate obtained by molecular distillation was analyzed and determined to be substantially pure HMDI (see Table 1).

REFERENTIAL EXAMPLE 2

Preparation of an acrylic polyol (B):-

Styrene, methyl methacrylate, n-butyl methacrylate, n-butyl acrylate, beta-hydroxyethyl methacrylate and methacrylic acid were radical-polymerized in a mixed solvent of xylene and isobutyl acetate to give the desired polyol (B) having an NV of 55.0%, a hydroxyl value of 25, an acid value of 3.5, a number average molecular weight of 7,800 and a Tg (calculated) of 60°C. The product will be abbreviated as polyol (B-1).

REFERENTIAL EXAMPLES 3-6

Preparation of an isocyanurate ring-containing polyisocyanate (A):-

Various polyisocyanates (A) were prepared in the same way as in Referential Example 1 except that the starting materials in the proportions indicated in Table 1 were used.

Subsequently, in the same way as in Referential Example 1, solutions of polyisocyanate (A), designated as polyisocyanates (A-2) to (A-5) were prepared. The properties of the polyisocyanate (A) solutions were measured,

and distillates obtained by molecular distillation were analyzed. The resutls are summarized in Table 1.

Analysis showed that the resulting polyisocyanates (A) all contained an isocyanurate ring.

Table 1

| Referential Examples | | 1 | 3 | 4 | 5 | 6 |
|---|---|---|---|---|---|---|
| Materials charged (g) | HMDI | 1,400 | 980 | 1,316 | 1,400 | 1,400 |
| | $H_6XDI$ | | 420 | | | |
| | XDI | | | 84 | | |
| | TMPD | 50 | 50 | 50 | | |
| | HCP | | | | 50 | |
| Designation of polyisocyanate (A) | | A - 1 | A - 2 | A - 3 | A - 4 | A - 5 |
| Properties | NV (%) | 75.2 | 75.2 | 74.8 | 75.1 | 75.0 |
| | Viscosity | A1-A | B | B-C | A-B | A2-A1 |
| | NCO Content (%) | 15.0 | 14.1 | 13.8 | 14.8 | 16.4 |
| | Molecular weight | 643 | 675 | 730 | 672 | 620 |
| Proportions of the materials in polyisocyanate (A) (%, estimated) (*) | HMDI | 90 | 65 | 70 | 90 | 100 |
| | $H_6XDI$ | | 28 | | | |
| | XDI | | | 19 | | |
| | TMPD | 10 | 7 | 11 | | |
| | HCP | | | | 10 | |

(*): Estimated from the results of the analysis.

HMDI: hexamethylene diisocyanate

$H_6XDI$: 1,3-bis(isocyanatomethyl)cyclohexane

XDI: 1,3-xylylene diisocyanate

TMPD: 2,2,4-trimethyl-1,3-pentanediol

HCP: 2,2'-bis(4-hydroxycyclohexyl)propane

EXAMPLE 1

The polyisocyanate (A-1) obtained in Referential Example 1, the acrylic polyol (B-1) obtained in Referential Example 2 and rutile titanium dioxide were mixed so that the NCO/OH equivalent ratio was 1.0 and the pigment weight concentration (PWC) was 35%. The mixture was diluted with a thinner composed of "Solvesso 100" (manufactured by Exxon Chemicals), xylene, toluene, n-butyl acetate, ethyl acetate and Cellosolve acetate in a weight ratio of 10/40/20/10/10/10 to form a paint.

The operability in coating and film properties of this paint were tested.

A sample for testing the operability in coating was prepared by coating the paint on a tin plate by means of a bay coater so that the dry film thickness would become 35 to 45 micrometers, and drying it by allowing it to stand at 20°C. A sample for testing film properties was prepared by coating the paint on zinc phosphate finished steel plate by an air sprayer so that the dry film thickness would become 35 to 45 micrometers, and allowing it to stand at 20°C to dry it.

In the testing of the operability in coating, the dust-free time denotes the time (minutes) required for the coated film to be cured until a copper powder failed to adhere to the coated surface. The water spot disappearance time denotes the time (hours) requried for the coated film to be cured until a water droplet dropped onto the coated surface did not leave a water spot after drying. The water spot disappearance time is measured specifically by dropping three drops (0.2 - 0.3g) of water onto the coated surface from a height of 2 to 3 cm by a glass squirt with the passage of time after the coating, and measuring the time which elapsed until no water spot was observed after the traces of spontaneous evaporation of the water droplets have been wiped off with absorbent cotton. For example, when water spots

are noted in the test conducted 14 hours after the coating but no water spot is observed in the test conducted after the lapse of 15 hours, the water spot disappearance time is recorded as 15 hours. The test results are shown in Table 2.

The properties of the coated film were measured by conventional methods. The results are also shown in Table 2.

EXAMPLES 2-5

In each run, a non-yellowing two-package urethane paint was prepared in the same way as in Example 1 using the acrylic polyol (B-1) obtained in Referential Example 2, the isocyanurate ring-containing polyisocyanate (A-2, A-3, A-4 or A-5) obtained in Referential Example 3, 4, 5 or 6, and rutile titanium dioxide. The paint was applied as in Example 1, and the operability in coating and film properties were examined. The results are shown in Table 2.

COMPARATIVE EXAMPLE 1

A paint was prepared and tested in the same way as in Examples 1 to 5 except that a commercial HMDI-derived biuret type polyisocyanate was used instead of the isocyanurate ring-containing polyisocyanates (A-1 to A-5).

EXAMPLES 6-9

Styrene, methyl methacrylate, n-butyl acrylate, beta-hydroxyethyl methacrylate and methacrylic acid were radical-polymerized in a mixed solvent of toluene and n-butyl acetate in the presence of a polyester obtained in a customary manner from adipic acid, isophthalic acid, neopentyl glycol, 1,6-hexanediol and trimethylolpropane to prepare an acrylic polyol (B-2) having an NV of 50.5%, a hydroxyl value of 50, an acid value of 3, a number average molecular weight of 16,000 and a Tg (calculated) of 50$^{O}$C. In each run, a non-yellowing two-package urethane paint was prepared as in Example 1 using the

acrylic polyol (B-2) and the isocyanurate ring-containing polyisocyanate (A-1, A-2, A-3 or A-4) obtained in Referential Example 1, 3, 4 or 5, and rutile titanium dioxide. The resulting paints were examined for operability in coating and film properties as in Example 1, and the results are shown in Table 3.

COMPARATIVE EXAMPLE 2

A paint was prepared and tested as in Examples 6 to 9 except that a commercial HMDI-derived biuret-type polyisocyanate instead of the isocyanurate ring-containing polyisocyanates (A-1 to A-4). The results are shown in Table 3.

Table 2

| | | Example | | | | | Comparative Example 1 |
|---|---|---|---|---|---|---|---|
| | | 1 | 2 | 3 | 4 | 5 | |
| Polyisocyanate used | | A-1 | A-2 | A-3 | A-4 | A-5 | Commercial HMDI-derived biuret-type polyisocyanate |
| Acrylic polyol used | | B-1 | B-1 | B-1 | B-1 | B-1 | B-1 |
| Operability in coating (at 20°C) | Dust free time (minutes) | 25 | 15 | 15 | 25 | 25 | 35 |
| | Water spot appearance time (hours) | 15 | 11 | 11 | 15 | 18 | 21 |
| Film properties (measured at 20°C 7 days after coating) | Gloss | 91 | 91 | 92 | 91 | 92 | 91 |
| | Hardness | H | | | | | H |
| | Adhesion | 100/100 | | | | | 100/100 |
| | Impact strength | 20 | | | | | 20 |
| | Acid resistance | ◎ | | | | | ◎ |
| | Alkali resistance | ◎ | | | | | ◎ |
| | Gasoline resistance | ◎ | | | | | ◎ |
| | Water resistance | ◎ | | | | | ◎ |

Table 3

| | | Example 6 | Example 7 | Example 8 | Example 9 | Comparative Example 2 |
|---|---|---|---|---|---|---|
| Polyisocyanate used | | A-1 | A-2 | A-3 | A-4 | Commercial HMDI-derived biuret-type polyiso-cyanate |
| Acrylic polyol used | | B-2 | B-2 | B-2 | B-2 | B-2 |
| Operability in coating (at 20°C) | Dust free time (minutes) | 35 | 25 | 25 | 35 | 65 |
| | Water spot appearance time (hours) | 15 | 12 | 12 | 21 | 23 |
| Film properties (measured at 20°C 7 days after coating) | Gloss | 92 | 93 | 92 | 92 | 92 |
| | Hardness | F - H | | | | F |
| | Adhesion | 100/100 | | | | 100/100 |
| | Impact strength | 40 | 30 | 30 | 40 | 40 |
| | Acid resistance | ◎ | | | | ◎ |
| | Alkali resistance | ◎ | | | | ◎ |
| | Gasoline resistance | ◎ | | | | ◎ |
| | Water resistance | ◎ | | | | ◎ |

It is clearly seen from the results given in Tables 2 and 3 that the method of this invention can give cured coated films having good properties equivalent to those obtained by a conventional method (a coating method using a conventional two-package urethane paint), and with regard to the coating characteristics of the paint used, the dust-free time and the spot disappearance time are much shorter than those in accordance with the conventional method.

Accordingly, the method of this invention is usuful for surface-finish coating of relatively heavy or relatively large-sized articles which cannot be forcibly dried, particularly for repair coating of automobiles.

What is claimed is:

1. A surface-finish coating method, which comprises coating a surface with a two-package urethane paint comprising

(A) an isocyanurate ring-containing polyisocyanate derived from a diisocyanate compound selected from the group consisting of alkylene diisocyanates, cycloalkylene diisocyanates and aralkylene diisocyanates, and

(B) an acrylic polyol having a number average molecular weight of 4,000 to 25,000, a hydroxyl value of 20 to 160 and a glass transition temperature of 35 to 75$^{o}$C,

as essential binder components.

2. The method of claim 1 wherein the polyisocyanate (A) is a diol-modified polyisocyanate.

3. The method of claim 1 or 2 wherein the polyisocyanate (A) is a polyisocyanate modified with an alkylene diol containing at least 3 hydrocarbon substituents per molecule and having a molecular weight of 100 to 1,000.

4. The method of claim 1 or 2 wherein the polyisocyanate (A) is an isocyanate modified with a cycloalkylene diol.

5. The method of claim 1 or 2 wherein the polyisocyanate (A) is a mixture of an isocyanurate ring-containing polyisocyanate modified with an alkylene diol containing at least 3 hydrocarbon substituents per molecule and having a molecular weight of 100 to 1,000 and an isocyanurate ring-containing polyisocyanate modified with a cycloalkylene diol.